# EUROPÄISCHE PATENTSCHRIFT

(11) **EP 1 097 055 B1**
(45) Veröffentlichungstag und Bekanntmachung des Hinweises auf die Patenterteilung: **29.12.2004**
(21) Anmeldenummer: 00943567.8
(22) Anmeldetag: 06.05.2000
(51) Int. Cl.: B60K 41/00, B60K 41/22

(54) **TRIEBSTRANGANORDNUNG FÜR EIN KRAFTFAHRZEUG UND VERFAHREN ZUR STEUERUNG DES BETRIEBS DERSELBEN**
DRIVETRAIN ARRANGEMENT FOR A MOTOR VEHICLE AND METHOD FOR CONTROLLING THE OPERATION THEREOF
ENSEMBLE TRAIN DE TRANSMISSION POUR VEHICULE AUTOMOBILE ET PROCEDE POUR COMMANDER LE FONCTIONNEMENT DUDIT ENSEMBLE

(30) Priorität: 10.05.1999 DE 19921354; 16.02.2000 DE 10006861
(43) Veröffentlichungstag der Anmeldung: 09.05.2001
(73) Patentinhaber: ROBERT BOSCH GMBH, 70442 Stuttgart (DE)
(72) Erfinder: AHNER, Peter, 71032 Boeblingen (DE); HAAS, Wolfgang, 70825 Korntal-Muenchingen (DE); MANGOLD, Torsten, 71522 Backnang (DE); ACKERMANN, Manfred, 71570 Oppenweiler (DE); FRANK, Andreas, 71063 Sindelfingen (DE); GLAUNING, Juergen, 71711 Steinheim (DE)
(86) Internationale Anmeldenummer: PCT/DE2000/001435
(87) Internationale Veröffentlichungsnummer: WO 2000/068034

(56) Entgegenhaltungen:
- DE-A- 3 737 192
- DE-A- 19 650 725
- DE-A- 19 838 853
- US-A- 5 845 731

## Beschreibung

Die Erfindung betrifft eine Triebstranganordnung für ein Kraftfahrzeug und ein Verfahren zur Steuerung derselben mit den in den Oberbegriffen der Ansprüche 1 und 3 genannten Merkmalen, die aus der DE 3 737 192 A bekannt sind.

### Stand der Technik

Aus dem Stand der Technik sind Triebstranganordnungen bekannt, bei denen aufeinander folgend eine Verbrennungskraftmaschine, eine Starterkupplung, eine elektrische Maschine, eine Fahrkupplung und ein automatisches Getriebe, vorzugsweise ein automatisiertes Schaltgetriebe, angeordnet sind. Die elektrische Maschine kann unter anderem als Startergenerator genutzt werden. Üblicherweise werden die aufgezählten Komponenten in ihren Betriebszuständen koordiniert den jeweiligen Situationen, die sich beim Betrieb des Kraftfahrzeugs ergeben, angepasst. Zumeist erfolgt eine solche Steuerung über ein zentrales Motorsteuergerät, das den einzelnen Komponenten der Triebstranganordnung zugeordneten Stellgliedern einzustellende Sollgrößen vorgibt. So weisen beispielsweise die Starterkupplung und die Fahrkupplung separate Kupplungssteller auf, mit denen wahlweise ein Status (geöffnet oder geschlossen) der Kupplungen eingestellt werden kann. Eine Teilereduktion der in der Triebstranganordnung vorhandenen Komponenten wird dabei aus vielfältiger Sicht angestrebt. Einerseits führt ein Wegfall von Teilen zu verringerten Materialkosten und einem verringerten Montageaufwand, so dass die Herstellungskosten reduziert werden können. Andererseits erlaubt die miteinhergehende Platzersparnis eine Bauraumoptimierung und die Gewichtsersparnis senkt dann einen Kraftstoffverbrauch des Kraftfahrzeugs.

### Vorteile der Erfindung

Durch die erfindungsgemäße Triebstranganordnung und das Verfahren zur Steuerung des Betriebs derselben mit den in den Ansprüchen 1 und 5 genannten Merkmalen ist eine zusätzliche Teilereduktion möglich. Dadurch, dass den beiden Kupplungen ein gemeinsamer Doppelkupplungssteller zugeordnet ist, der eine wahlweise Einstellung des jeweiligen Status (geöffnet oder geschlossen) der Kupplungen durch Einnahme einer entsprechenden Schaltstellung ermöglicht, kann auf einen der beiden üblichen Kupplungssteller verzichtet werden.

In einer bevorzugten Ausgestaltung der Erfindung wird dem Doppelkupplungssteller ein Steuergerät zur Vorgabe der Schaltstellungen zugeordnet. Die Vorgabe der Schaltstellungen erfolgt dabei in Abhängigkeit von den Betriebszuständen und/oder Betriebsparametern der am Kraftfahrzeug vorhandenen Aggregate. In vielen Betriebssituationen kann auf bereits bewährte Steuerungsmechanismen zurückgegriffen werden.

Der Doppelkupplungssteller weist vorzugsweise bis zu vier Schaltstellungen auf, deren Lage durch Vorgabe unterschiedlicher Ausrückwege für den Doppelkupplungssteller definierbar sind, bei denen
- beide Kupplungen geschlossen sind (Kupplungszustand Z1) oder
- die Starterkupplung geöffnet und die Fahrkupplung geschlossen ist (Kupplungszustand Z2) oder
- beide Kupplungen geöffnet sind (Kupplungszustand Z3) oder
- die Starterkupplung geschlossen und die Fahrkupplung geöffnet ist (Kupplungszustand Z4).

In einer weiteren bevorzugten Ausgestaltung der Erfindung werden lediglich drei Schaltstellungen im Doppelkupplungssteller implementiert und es wird entweder auf den vorab genannten Kupplungszustand Z3 oder den Kupplungszustand Z4 verzichtet. In Betriebssituationen des Kraftfahrzeugs, in denen die genannten Kupplungszustände erforderlich wären, wird dies durch eine Steuerung der Betriebszustände der im Kraftfahrzeug vorhandenen Aggregate kompensiert. Dazu ist es beispielsweise möglich, über das Steuergerät Mittel zu betätigen, mit denen das Schaltgetriebe in eine Neutralstellung schaltbar ist.

Ferner offenbart die vorliegende Erfindung besonders bevorzugte Ausgestaltungen für den Fall, dass auf den Kupplungszustand Z4 verzichtet wird. In zumindest den nachfolgenden Betriebssituationen
- einem Start der Verbrennungskraftmaschine,
- bei dem Schaltvorgang im Getriebe,
- einem Standbetrieb der Verbrennungskraftmaschine und
- einer starken Abbremsung, zum Beispiel einer ABS-Bremsung, bei Antrieb über die Verbrennungskraftmaschine
wird der fehlende Kupplungszustand Z4 dadurch kompensiert, dass der Kupplungszustand Z1 und eine Neutralstellung des Getriebes eingestellt wird. Zum Gangwechsel muss das Getriebe mittels Steuerung von Verbrennungskraftmaschine und elektrischer Maschine lastfrei geschaltet und synchronisiert werden. Weiterhin ist bevorzugt, ein Anfahren des Kraftfahrzeugs bei Verzicht auf den Kupplungszustand Z4 derart auszugestalten, dass der Kupplungszustand Z1 und ein Gang in das Getriebe eingelegt werden, sowie der Antrieb über eine schleifende Starterkupplung erfolgt.

In einer weiteren bevorzugten Ausgestaltung der Erfindung, bei der auf den Kupplungszustand Z3 verzichtet wurde, lässt sich ein Impulsstart der Verbrennungskraftmaschine dadurch verwirklichen, dass zumindest zeitweise dem Doppelkupplungssteller der Kupplungszustand Z2 und die Neutralstellung des Getriebes vorgegeben wird. Weiterhin lässt sich bei Verzicht auf den Kupplungszustand Z3 eine starke Abbremsung, zum Beispiel eine ABS-Bremsung, bei Antrieb über die elektrische Maschine derart ausgestalten, dass zunächst in den Kupplungszustand Z1 und anschließend in den Kupplungszustand Z4 geschaltet wird. Dabei kann das Schließen der Kupplung K2 über Zusatzelemente verzögert werden, bis der Zustand Z1 erreicht ist.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine erste Variante für eine Triebstranganordnung, die einen Doppelkupplungssteller mit drei Schaltstellungen aufweist und
- Figur 2: eine zweite Variante für einen solchen Doppelkupplungssteller mit drei Schaltstellungen.

### Beschreibung der Ausführungsbeispiele

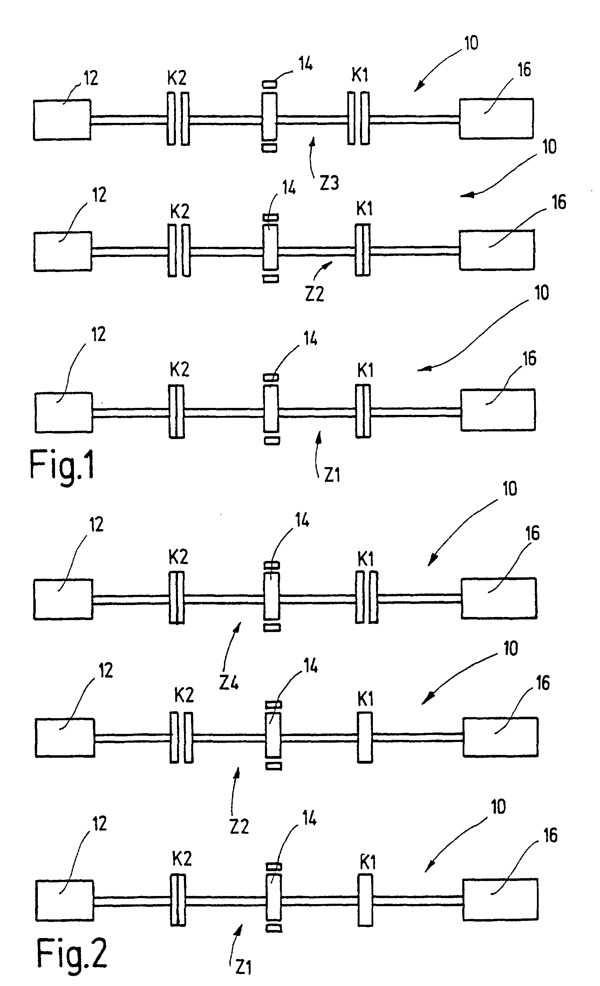

In den Figuren 1 und 2 sind schematisch Triebstranganordnungen 10 für ein Kraftfahrzeug dargestellt. Die Triebstranganordnung 10 umfasst unter anderem aufeinander folgend eine Verbrennungskraftmaschine 12, eine Starterkupplung K2, eine elektrische Maschine 14, eine Fahrkupplung K1 sowie ein automatisches, vorzugsweise automatisiertes Schaltgetriebe 16. Die elektrische Maschine 14 kann als Startergenerator ausgelegt sein und überträgt dann bei geschlossener Starterkupplung K2 ein zum Start der Verbrennungskraftmaschine 12 notwendiges Drehmoment. Die elektrische Maschine 14 kann weiterhin als Asynchronmaschine ausgelegt sein und gegebenenfalls zum Antrieb des Kraftfahrzeugs sowie zum Wiederaufladen einer Batterie genutzt werden. Die notwendigen Mittel beziehungsweise Steuerungsabläufe zur Darstellung derartiger Funktionalitäten sind hinreichend bekannt und sollen daher an dieser Stelle nicht näher erläutert werden.

Aus Gründen der Übersichtlichkeit ist ebenfalls auf eine Darstellung eines zur Koordination der Komponenten der Triebstranganordnung 10 nutzbaren Steuergerätes (Motorsteuergerät) verzichtet worden. Über ein solches Steuergerät können die Betriebszustände und/oder Betriebsparameter der einzelnen Komponenten der Triebstranganordnung 10 beeinflusst werden, indem geeignete Sollgrößen den jeweiligen Komponenten zugeordneten Stellgliedern vorgegeben werden. Speziell die beiden Kupplungen K1, K2 können durch einen nicht dargestellten gemeinsamen Doppelkupplungssteller betätigt werden. Eine Betätigung der Kupplungen K1, K2 führt jeweils zu einer Änderung des Status der Kupplungen K1, K2. Der Status ist dann entweder "geöffnet" oder "geschlossen".

Der Doppelkupplungssteller müsste maximal vier Schaltstellungen aufweisen, zwischen denen beispielsweise durch Vorgabe unterschiedlicher Ausrückwege geschaltet werden kann. Die möglichen Schaltstellungen sind:
- beide Kupplungen K1, K2 sind geschlossen (Kupplungszustand Z1);
- die Startkupplung K2 ist geöffnet und die Fahrkupplung K1 ist geschlossen (Kupplungszustand Z2);
- beide Kupplungen K1, K2 sind geöffnet (Kupplungszustand Z3) und
- die Starterkupplung K2 ist geschlossen und die Fahrkupplung K1 ist geöffnet (Kupplungszustand Z4).

Theoretisch werden alle vier Kupplungszustände Z1, Z2, Z3, Z4 zur Steuerung des Betriebs des Kraftfahrzeugs benötigt. Nach den in den Figuren 1 und 2 gezeigten Varianten 1 und 2 kann aber jeweils auf einen der Kupplungszustände Z3 oder Z4 verzichtet werden.

Über das Steuergerät kann dem Doppelkupplungssteller die einzustellende Schaltstellung vorgegeben werden. Die Vorgabe erfolgt in Abhängigkeit von den Betriebszuständen und/oder Betriebsparametern der im Kraftfahrzeug vorhandenen Aggregate. Damit kann je nach Betriebssituation flexibel auf die herrschenden Randbedingungen eingegangen werden und beispielsweise ein Startvorgang der Verbrennungskraftmaschine 12 oder ein Anfahren des Kraftfahrzeugs gesteuert werden.

Nach der in der Figur 1 dargestellten Variante 1 wird auf den Kupplungszustand Z4, bei dem die Starterkupplung K2 geschlossen und die Fahrkupplung K1 geöffnet ist, verzichtet. Zumindest in folgenden Betriebssituationen ist es dann notwendig, über das Steuergerät Eingriffe in die Betriebszustände und/oder Betriebsparameter der Komponenten der Triebstranganordnung 10 durchzuführen:
- eine Startphase der Verbrennungskraftmaschine 12;
- ein Schaltvorgang im Schaltgetriebe 16;
- ein Standbetrieb der Verbrennungskraftmaschine 12 und
- eine starke Abbremsung, zum Beispiel eine ABS-Bremsung, bei Antrieb über die Verbrennungskraftmaschine 12.

In den genannten Fällen wird nun mittels des Steuergerätes einerseits der Kupplungszustand Z1 dem Doppelkupplungssteller und andererseits eine Neutralstellung N im Schaltgetriebe 16 vorgegeben. Auf diese Weise kann beispielsweise während des Startvorgangs das Schaltgetriebe 16 und die ihm nachfolgenden Aggregate entkoppelt werden.

Beim Verzicht auf den Kupplungszustand Z4 kann ein Anfahren des Kraftfahrzeugs derart gesteuert werden, dass der Kupplungszustand Z1 eingestellt wird, ein Gang im Schaltgetriebe 16 vorgegeben wird und das Anfahren über eine schleifende Starterkupplung K2 erfolgt. Gegebenenfalls muss eine Drehzahlanpassung der Verbrennungskraftmaschine 12 durchgeführt werden, um beispielsweise eine Mindestdrehzahl sicherzustellen oder eine anschließende Getriebesynchronisation zu erleichtern.

Nach der in Figur 2 aufgezeigten Variante ist auf den Kupplungszustand Z3 verzichtet worden, bei dem beide Kupplungen K1, K2 geöffnet sind. Für den Fall, dass ein Impulsstart der Verbrennungskraftmaschine 12 durchgeführt werden soll, muss dann zumindest zeitweise der Kupplungszustand Z2 und eine Neutralstellung N des Schaltgetriebes 16 vorgegeben werden.

Wird bei Verzicht auf den Kupplungszustand Z3 und bei Antrieb über die elektrische Maschine 14 eine ABS-Bremsung durchgeführt, so muss über den Kupplungszustand Z1 in den Kupplungszustand Z4 übergegangen werden, bevor die Fahrkupplung K1 zur Entkopplung der Trägheiten von der Verbrennungskraftmaschine 12 und der elektrischen Maschine 14 geöffnet werden kann. Bei Einsatz der starken Abbremsung, zum Beispiel der ABS-Bremsung, wirkt sich hier neben der Trägheit im Antriebsstrang auch ein Momentenstoß beim Start der Verbrennungskraftmaschine 12 aus. Durch geeignete Zusatzelemente, beispielsweise einen selbst umschaltenden Dämpfer, kann gegebenenfalls das Schließen der Starterkupplung K2 verzögert werden.

## Patentansprüche

1. Triebstranganordnung für ein Kraftfahrzeug, bei der im Triebstrang aufeinander folgend eine Verbrennungskraftmaschine, eine Starterkupplung (K2), eine elektrische Maschine, eine Fahrkupplung (K1) und ein automatisches Getriebe, vorzugsweise automatisiertes Schaltgetriebe, angeordnet sind, wobei in den beiden Kupplungen (K1, K2) ein gemeinsamer Doppelkupplungssteller zugeordnet ist, der eine wahlweise Einstellung des jeweiligen Status (geöffnet oder geschlossen) der Kupplungen (K1, K2) durch Einnahme einer entsprechenden Schaltstellung ermöglicht, **dadurch gekennzeichnet, dass** dem Doppelkupplungssteller ein Steuergerät zur Vorgabe der Schaltstellungen zugeordnet ist, wobei die Vorgabe der Schaltstellungen in Abhängigkeit von den Betriebszuständen und/oder Betriebsparametern der im Kraftfahrzeug vorhandenen Aggregate erfolgt und mit dem Steuergerät Mittel betätigbar sind, mit denen das Schaltgetriebe (16) in eine Neutralstellung (N) schaltbar ist.

2. Triebstranganordnung nach Anspruch 1, **dadurch gekennzeichnet, dass** die elektrische Maschine (14) ein Startergenerator ist.

3. Verfahren zur Steuerung des Betriebs eines Kraftfahrzeuges mit einer Triebstranganordnung, bei der im Triebstrang aufeinanderfolgend eine Verbrennungskraftmaschine, eine Starterkupplung (K2), eine elektrische Maschine, eine Fahrkupplung (K1) und ein automatisches Getriebe, insbesondere automatisiertes Schaltgetriebe, angeordnet sind, wobei den beiden Kupplungen (K1, K2) ein gemeinsamer Doppelkupplungssteller zugeordnet ist und durch Einnahme einer vorgebbaren Schaltstellung im Doppelkupplungssteller eine Einstellung des jeweiligen Status (geöffnet oder geschlossen) der Kupplungen (K1, K2) ermöglicht wird, **dadurch gekennzeichnet, dass** drei Schaltstellungen durch Vorgabe unterschiedlicher Ausrückwege für den Doppelkupplungssteller definiert werden, bei denen
- beide Kupplungen (K1, K2) geschlossen sind (Kupplungszustand Zl) oder
- die Starterkupplung (K2) geöffnet und die Fahrkupplung (K1) geschlossen ist (Kupplungszustand (Z2)) oder
- beide Kupplungen (K1, K2) geöffnet sind (Kupplungszustand (Z3)),
wobei durch eine Steuerung der Betriebszustände der im Kraftfahrzeug vorhandenen Aggregate eine entfallene Schaltstellung, wonach die Starterkupplung (K2) geschlossen und die Fahrkupplung (K1) geöffnet ist (Kupplungszustand (Z4)), kompensiert wird, wobei bei Verwendung eines Doppelkupplungsstellers ohne Kupplungszustand (Z4) in zumindest folgenden Betriebssituationen
- ein Start der Verbrennungskraftmaschine (12);
- ein Schaltvorgang im Getriebe;
- ein Standbetrieb der Verbrennungskraftmaschine (12) und
- eine starke Abbremsung, zum Beispiel eine ABS-Bremsung, bei Antrieb über die Verbrennungskraftmaschine (12)
der Kupplungszustand (Z1) und eine Neutralstellung (N) des Getriebes eingestellt wird.

4. Verfahren nach Anspruch 3, **dadurch gekennzeichnet, dass** über ein Steuergerät eine Vorgabe der Schaltstellungen in Abhängigkeit von den Betriebszuständen und/oder Betriebsparametern der im Kraftfahrzeug vorhandenen Aggregate erfolgt.

5. Verfahren nach Anspruch 3, **dadurch gekennzeichnet, dass** bei Verwendung eines Doppelkupplungsstellers ohne Kupplungszustand (Z4) ein Anfahren des Kraftfahrzeuges im Kupplungszustand (Z1) bei im Getriebe eingelegtem Gang und über eine schleifende Starterkupplung (K2) erfolgt.

## Claims

1. Drive train arrangement for a motor vehicle, in which an internal combustion engine, a starter clutch (K2), an electric machine, a driving clutch (K1) and an automatic gearbox, preferably an automated change speed gearbox, are arranged in the drive train one after another, a common dual clutch actuator being assigned to the two clutches (K1, K2) which makes it possible to set the respective status (open or closed) as desired of the clutches (K1, K2) by assuming a corresponding switching position, **characterized in that** the dual clutch actuator is assigned a controller for stipulating the switching positions, the switching positions being stipulated as a function of the operating states and/or operating parameters of the assemblies present in the motor vehicle and it being possible to use the controller to actuate means with which the change speed gearbox (16) can be switched into a neutral position (N).

2. Drive train arrangement according to Claim 1, **characterized in that** the electric machine (14) is a starter generator.

3. Method for controlling the operation of a motor vehicle having a drive train arrangement in which an internal combustion engine, a starter clutch (K2), an electric machine, a driving clutch (K1) and an automatic transmission, in particular an automated change speed gearbox, are arranged in the drive train one after another, a common dual clutch actuator being assigned to the two clutches (K1, K2) and it being possible to set the respective status (open or closed) of the clutches (K1, K2) by assuming a predefinable switching position in the dual clutch actuator, **characterized in that** three switching positions are defined by stipulating differing disengagement travel for the dual clutch actuator, in which
- both clutches (K1, K2) are closed (clutch state Z1), or
- the starter clutch (K2) is open and the driving clutch (K1) is closed (clutch state (Z2)), or
- both clutches (K1, K2) are open (clutch state (Z3)),
an omitted switching position, according to which the starter clutch (K2) is closed and the driving clutch (K1) is open (clutch state (Z4)), being compensated for by controlling the operating states of the assemblies present in the motor vehicle, the coupling state (Z1) and a neutral position (N) of the gearbox being set if a dual clutch actuator without clutch state (Z4) is used in at least the following operating situations:
- starting of the internal combustion engine (12);
- a gear change operation in the gearbox;
- a stationary operating mode of the internal combustion engine (12), and
- a pronounced braking operation, for example an ABS braking operation, during drive by the internal combustion engine (12).

4. Method according to Claim 3, **characterized in that** the switching positions are stipulated via a controller as a function of the operating states and/or operating parameters of the assemblies present in the motor vehicle.

5. Method according to Claim 3, **characterized in that**, when a dual clutch actuator without clutch state (Z4) is used, the motor vehicle moves away in clutch state (Z1) with a gear engaged in the gearbox and via a slipping starter clutch (K2).

## Revendications

1. Ensemble train de transmission pour véhicule automobile dans lequel un moteur à combustion interne, un embrayage de démarrage (K2), un moteur électrique, un embrayage de roulement (K1) et une boîte de vitesses automatique, de préférence une boîte de vitesses automatisée, sont disposés respectivement dans l'ordre dans le train de transmission, un double actionneur d'embrayage commun étant associé aux deux embrayages (K1, K2) et permettant un réglage au choix de l'état respectif (ouvert ou fermé) des embrayages (K1, K2) par l'adoption d'une position de commutation correspondante,
**caractérisé en ce qu'**
un appareil de commande est associé au double actionneur d'embrayage pour donner les positions de commutation, l'attribution des positions de commutation ayant lieu en fonction des états de fonctionnement et/ou des paramètres de fonctionnement des agrégats existant dans le véhicule automobile et des moyens permettant de commuter la boîte de vitesses (16) à un point mort (N) pouvant être actionnés avec l'appareil de commande.

2. Ensemble train de transmission selon la revendication 1,
**caractérisé en ce que**
le moteur électrique (14) est un générateur de démarrage.

3. Procédé pour commander le fonctionnement d'un véhicule automobile doté d'un ensemble train de transmission dans lequel un moteur à combustion interne, un embrayage de démarrage (K2), un moteur électrique, un embrayage de roulement (K1) et une boîte de vitesses automatique, notamment une boîte de vitesses automatisée, sont disposés respectivement dans l'ordre dans le train de transmission, un double actionneur d'embrayage commun étant associé aux deux embrayages (K1, K2) et permettant un réglage de l'état respectif (ouvert ou fermé) des embrayages (K1, K2) par l'adoption d'une position de commutation correspondante dans le double actionneur d'embrayage,
**caractérisé en ce que**
trois positions de commutation sont définies par l'attribution de différents chemins de débrayage pour le double actionneur d'embrayage dans lesquelles
- les deux embrayages (K1, K2) sont fermés (état d'embrayage Z1) ou
- l'embrayage de démarrage (K2) est ouvert et l'embrayage de roulement (K1) est fermé (état d'embrayage (K2)) ou
- les deux embrayages (K1, K2) sont ouverts (état d'embrayage Z3)).
la suppression d'une position de commutation suivant laquelle l'embrayage de démarrage (K2) est fermé et l'embrayage de roulement (K1) est ouvert (état d'embrayage Z4)) étant compensée par une commande des états de fonctionnement des agrégats existant dans le véhicule automobile, l'état d'embrayage (Z1) et un point mort (N) de la boîte de vitesses étant réglés lors de l'utilisation d'un double actionneur d'embrayage sans état d'embrayage (Z4) au moins dans les situations de fonctionnement suivantes :
- un démarrage du moteur à combustion interne (12) ;
- un changement de rapport dans la boîte de vitesses ;
- un fonctionnement à l'arrêt du moteur à combustion interne (12) et
- un freinage important, par exemple un freinage ABS, lors de l'entraînement via le moteur à combustion interne (12)

4. Procédé selon la revendication 3,
**caractérisé en ce qu'**
une attribution des positions de commutation a lieu via un appareil de commande en fonction des états de fonctionnement et/ou des paramètres de fonctionnement des agrégats existant dans le véhicule automobile.

5. Procédé selon la revendication 3,
**caractérisé en ce que**
lors de l'utilisation d'un double actionneur d'embrayage sans état d'embrayage (Z4), un démarrage du véhicule automobile à l'état d'embrayage (Z1) se produit pour un rapport de vitesse engagé dans la boîte de vitesses et via un embrayage de démarrage traînant (K2).
